# FASCICULE DE BREVET EUROPEEN

(11) **EP 1 216 753 B1**
(45) Date de publication et mention de la délivrance du brevet: **19.04.2006**
(21) Numéro de dépôt: 01403075.3
(22) Date de dépôt: 30.11.2001
(51) Int. Cl.: B01J 31/40, B01J 38/48, B01D 53/86, C01B 17/05

(54) **Procédé de régénération d'une solution catalytique redox comprenant la mesure de l'oxygène dissous dans l'effluent de régénération et son application en désulferation**
Verfahren zur Regenerierung einer redox-katalytischen Lösung, beinhaltend die Bestimmung des Sauerstoffgehaltes des Abwassers und dessen Verwendung zur Entschwefelung
Regeneration process of a redox catalytic solution comprising the measure of the oxygen dissolved in the regeneration effluent and the use thereof for desulfuration

(30) Priorité: 21.12.2000 FR 0016729
(43) Date de publication de la demande: 26.06.2002
(73) Titulaire: Institut Français du Pétrole, 92852 Rueil-Malmaison Cedex (FR)
(72) Inventeur: Huard, Thierry, 92120 Montrouge (FR); Streicher, Christian, 92500 Rueil Malmaison (FR)

(56) Documents cités:
- DE-A- 3 444 252
- FR-A- 2 771 945
- FR-A- 2 794 665
- US-A- 4 532 118
- US-A- 4 859 436
- US-A- 5 753 189

## Description

La présente invention concerne un procédé de régénération d'une solution catalytique dans un procédé de désulfuration par oxydo-réduction d'une charge gazeuse contenant de l'hydrogène sulfuré afin d'une part, d'optimiser le fonctionnement du procédé en fonction de la quantité d'H₂S à éliminer et d'autre part, de diminuer la dégradation de l'agent chélatant ou complexant mise en oeuvre dans le procédé.

Le procédé selon l'invention s'applique notamment à la régénération à l'air de la solution catalytique au cours d'un procédé « rédox » de désulfuration d'un gaz contenant au moins de l'hydrogène sulfuré. Au cours de ce procédé on utilise une solution catalytique comprenant au moins un métal polyvalent chélaté (Fe³⁺, V ⁵⁺), par au moins un agent chélatant dans des conditions appropriées pour réaliser l'oxydation de l'hydrogène sulfuré en soufre élémentaire et la réduction simultanée du métal polyvalent chélaté d'un degré d'oxydation supérieur à un degré d'oxydation inférieur. On récupère d'une part, un effluent gazeux sensiblement exempt d'hydrogène sulfuré et d'autre part une solution catalytique au moins partiellement réduite contenant du soufre élémentaire. Le soufre élémentaire solide peut être séparé ou non de la solution catalytique partiellement réduite. Une partie au moins de ladite solution catalytique partiellement réduite et débarrassée ou non de la majorité du soufre élémentaire solide est détendue. Ladite solution est, en général, régénérée à l'air dans une zone de régénération. En sortie de cette étape de régénération, la solution régénérée est recyclée à l'étape d'oxydation du gaz contenant l'hydrogène sulfuré.

L'art antérieur décrit de nombreux procédés rédox et des dispositifs associés permettant d'éliminer l'hydrogène sulfuré et de récupérer le soufre élémentaire formé au cours du procédé.

Le procédé de désulfuration comporte par exemple les deux étapes d'oxydo-réduction suivantes :
- dans une première étape, (étape d'absorption, réaction d'oxydo-réduction), l'hydrogène sulfuré présent dans le gaz à traiter réagit avec des ions ferriques chélatés selon la réaction

   H₂S + 2 Fe³⁺ (chél) → S + 2H⁺ + 2Fe²⁺ (chél) (1)
- dans une deuxième étape (étape de régénération), les ions ferreux sont réoxydés par l'oxygène de l'air suivant la réaction :

   O_{2gaz} →O_{2liquide} (2)

   2Fe²⁺ (chél) + 2H⁺ + ½ O₂ →2 Fe³⁺ (chél) + H₂O (3)

Soit la réaction globale : H₂S + ½ O₂ → 1/8 S₈ + H₂O

Dans le cas où le métal est le vanadium, la réaction de régénération est :

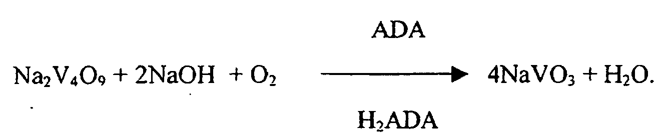

Dans cette réaction, des réactions secondaires peuvent entraîner une dégradation de l'ADA.

Il est connu que les procédés rédox présentent une flexibilité dans leur capacité de traitement en terme de débits et de concentration en H₂S mais cette flexibilité est réalisée, en général, sans contrôle de l'oxygène. D'autre part, il est connu également que c'est au cours de la deuxième étape que se produit la dégradation de l'agent chélatant ce qui rend le procédé coûteux puisqu'il est nécessaire d'en rajouter. De plus, la dégradation de l'agent chélatant entraîne la formation de produits s'accumulant dans la solution catalytique et pouvant précipiter. Ces produits organiques ou pas sont entraînés par le soufre et contribuent à sa mauvaise qualité d'où un surcoût. Cette dégradation met en jeu des espèces très réactives telles que les radicaux libres qui sont initiés par la présence d'oxygène dissous dans la solution catalytique.

Les solutions catalytiques sont donc complexes car chargées en composés organiques ou non et en concentrations plus ou moins élevées selon les formulations. Cette présence de composés a un impact direct sur la première étape de la réaction de régénération, réaction (2) qui est le transfert de l'oxygène gazeux dans la solution catalytique et par conséquent sur la présence d'oxygène dissous dans le coeur de la solution.

Pour diminuer la dégradation de l'agent chélatant, le brevet US 5 223 173 revendique un fonctionnement du procédé avec un excès de métal polyvalent complexé au degré d'oxydation inférieur que ce soit à l'étape d'absorption ou d'oxydation.

Mais le procédé, en fonctionnant avec un excès de métal complexé au degré d'oxydation le plus faible, sera moins flexible aux fluctuations de débit ou de concentration en H₂S dans le gaz à traiter. Sa capacité de traitement sera donc plus faible à dimensionnement équivalent.

Dans le brevet US 5 422 086, la dégradation de l'agent chélatant est supposée en relation, d'une part, avec le temps de séjour de la solution dans le réacteur et, d'autre part, inversement proportionnelle à la concentration en métal de degré d'oxydation le plus faible. Pour diminuer la dégradation de l'agent chélatant, il est préconisé de ne pas convertir totalement le Fer(II) en Fer(III) en ayant un rapport Fer(II)/Fer total inférieur à 0.1. Pour éviter des phénomènes de rétromélange, ce brevet revendique l'utilisation de deux réacteurs, le premier fonctionnant à co-courant et le second à contre-courant. Le procédé, tel que décrit, permet à la sortie de l'étape de régénération d'avoir une concentration en Fe(II) inférieure à 0,1 mole par mole de Fer total.

Mais ce dispositif, nécessitant deux réacteurs pour l'étape de régénération de la solution catalytique, s'avère très coûteux.

Enfin, l'utilisation d'agent antioxydant tel que le thiosulfate peut également contribuer à diminuer la dégradation de l'agent chélatant. Le brevet US 6 083 472 revendique une méthode pour générer des ions thiosulfate en utilisant une dérivation du gaz à traiter. Cette fraction est traitée avec de la soude ou de la potasse, H₂S est transformé en ions HS⁻. Cette solution est ensuite injectée directement avec la solution catalytique réduite dans l'oxydeur où les ions HS⁻ sont oxydés en thiosulfates tandis que la solution catalytique réduite est réoxydée. Il est donc nécessaire d'introduire un réacteur supplémentaire avec une gestion de produits chimiques s'ajoutant aux produits chimiques déjà nécessaires sur les procédés Rédox.

Le brevet FR-A-2 794 665 décrit par ailleurs un dispositif pour disperser du gaz utilisé pour régénérer la solution catalytique en très fines bulles dans ladite solution. Le brevet FR-A-2 771 945 enseigne aussi la régénération d'une phase aqueuse catalytique par un agent oxydant.

Enfin l'arrière plan technologique est illustré par les brevets US-A-4 859 436, US-A-4 532 118, US-A-5 753 189 et DE 3 444 252.

Un des objets de l'invention est de remédier aux inconvénients de l'art antérieur.

Un autre objet de l'invention est de proposer une nouvelle approche de fonctionnement de l'étape de régénération de la solution catalytique permettant d'une part, d'ajuster au mieux la consommation d'oxygène dans le procédé et d'autre part de diminuer la dégradation de l'agent complexant lors de l'étape de régénération.

Plus précisément, l'invention concerne un procédé de régénération d'une solution catalytique rédox au moins en partie réduite, comprenant au moins un agent chélatant d'un métal polyvalent associé à la dite solution dans lequel on fait circuler dans au moins une zone de régénération la dite solution en présence d'un gaz contenant de l'oxygène, dans des conditions de régénération appropriées et on récupère un effluent de régénération au moins en partie oxydé caractérisé en ce qu'on mesure la concentration en oxygène dissous dans l'effluent de régénération et on ajuste les paramètres opératoires de façon à minimiser la dégradation de l'agent chélatant et de façon à régénérer au moins en partie la solution catalytique.

Pour réaliser cette fonction, la concentration résiduelle en oxygène dissous est habituellement mesurée à la sortie de l'étape de régénération au moyen d'un capteur spécifique. Avantageusement, cette mesure peut être réalisée en ligne et peut contrôler par asservissement, par exemple, le débit d'air ou le débit de liquide vers l'oxydeur. L'asservissement peut être manuel ou automatique.

De manière plus détaillée, la présente invention concerne un procédé de régénération de la solution catalytique utilisée dans un procédé de désulfuration d'une charge gazeuse contenant de l'hydrogène sulfuré.

Par effluent de régénération, on peut entendre un effluent dont le rapport FerII/Fer total est habituellement inférieur à 0,5, c'est à dire qu'il a un pouvoir oxydant ; avantageusement inférieur à 0,1 tel que décrit dans le brevet US 5 422 086.

Le procédé de désulfuration peut comporter par exemple la succession d'étapes suivantes:
- on met en contact la charge gazeuse avec une solution aqueuse catalytique comprenant au moins un métal polyvalent chélaté, fer par exemple, par au moins un agent chélatant ou complexant, dans des conditions d'absorption appropriées pour effectuer l'oxydation de l'hydrogène sulfuré en soufre élémentaire et la réduction concomitante du métal polyvalent d'un degré d'oxydation supérieur à un degré d'oxydation inférieur, et l'on récupère, d'une part un effluent gazeux sensiblement débarrassé en hydrogène sulfuré et, d'autre part la solution catalytique au moins en partie réduite et contenant du soufre élémentaire,
- on sépare éventuellement le soufre élémentaire,
- on envoie la dite solution catalytique filtrée ou non filtrée à l'étape de régénération à l'air,
- on régénère ladite solution réduite dans une zone de régénération en la mettant en contact avec un agent oxydant et on récupère la solution catalytique au moins en partie régénérée, et on recycle à l'étape d'absorption d'H₂S une partie au moins de la solution aqueuse catalytique régénérée,
- à la sortie de la zone de régénération, on mesure la concentration en oxygène dissous dans la solution catalytique
- en fonction de la mesure, on agit sur les paramètres opératoires de l'étape de régénération tels que, par exemple, le débit d'air et/ou le débit de liquide vers l'oxydeur pour être en régime de transfert d'oxygène contrôlé en sortie de la zone de régénération.

Le soufre élémentaire peut être séparé sous pression ou à la pression atmosphérique. La solution à régénérer peut être détendue et/ou dépressurisée, ou sous pression.

Selon un mode de fonctionnement du procédé, cette mesure de la concentration résiduelle en oxygène dissous est avantageusement réalisée en ligne et en continu, et le fonctionnement de l'oxydeur est asservi à la mesure. On peut aussi ajuster en continu les paramètres de fonctionnement du procédé, en particulier le débit du gaz contenant l'oxygène.

Selon un mode de mise en oeuvre du procédé, on peut agir sur les paramètres de fonctionnement comme par exemple, le débit d'air ou le débit de liquide envoyé vers l'étape d'oxydation, de façon à obtenir une valeur de la concentration en oxygène dissous inférieure à 20% de la valeur de la concentration en oxygène dissous à la saturation dans l'eau dans les conditions de température et de pression de la régénération, avantageusement inférieure à 10%, de préférence comprise entre 0,01 % et 5% et plus particulièrement sensiblement égale à 0%.

Le capteur sera préférentiellement installé à la sortie de l'oxydeur. Ce capteur est constitué d'une sonde de mesure de l'oxygène dissous dont le principe de mesure est par exemple ampérométrique ou polarographique.

La mesure est généralement réalisée à une température de l'effluent comprise entre 15°C et 50°C, c'est à dire sensiblement celle de la régénération et sous une pression habituellement comprise entre la pression atmosphérique et quelques bars (1bar = 10⁵Pa).

La solution catalytique, de préférence aqueuse, peut être une solution de fer chélaté, produite à partir de fer ferreux ou ferrique tel que les sulfates, les nitrates, le thiosulfate, le chlorure, l'acétate, l'oxalate, les phosphates, les sels solubles de fer et d'ammonium ou de potassium, tels que le sulfate de fer ferreux et d'ammonium, l'oxalate ferrique d'ammonium, l'oxalate ferrique de potassium.

On peut utiliser des agents chélatants seuls ou en mélange, tels que des composés organiques connus pour leurs propriétés complexantes par exemple l'acétylacétone, l'acide citrique, l'acide salicyclique, l'acide sulfosalicylique, le tiron (acide catéchodisulfonique), le dimercapto-2-3 propanol et les aminoacides par exemple l'EDTA (acide éthylènediamine tétraacétique), l'HEDTA (acide hydroxy2éthylènediamine triaacétique), le NTA (acide nitrilotriacétique), le DCTA (acide diamino-1-2 cyclohexane tétraacétique), le DPTA (acide diéthylènetriamine pentaacétique), l'IDA (acide iminodiacétique) et l'ADA (acide N-2-acétamido)diacétique.

L'étape de régénération peut être réalisée dans des réacteurs type colonne à bulle ou éjecteur comme décrit par exemple dans le brevet FR 99/07360.

Selon un mode de mise en oeuvre du procédé, les réacteurs d'absorption et de régénération peuvent être communs. Dans ce cas, la mesure de l'oxygène dissous peut être effectuée sur l'effluent qui a par exemple un rapport FerII/Fer total, avant ou après l'étape de filtration, inférieur à 0,5.

Selon un autre mode de mise en oeuvre du procédé, la solution catalytique peut être une solution organique.

Selon un autre mode de mise en oeuvre du procédé, on réalise l'étape de régénération dans des réacteurs fonctionnant à co-courant ou à contre-courant avec l'alimentation en agent oxydant.

On peut utiliser pour l'étape de régénération de l'air ou de l'oxygène comme agent oxydant.

Le procédé peut être mis en oeuvre de la façon suivante :

Une solution catalytique au en moins en partie réduite est envoyée dans une zone de régénération. La solution régénérée par contact avec de l'air est telle qu'en sortie on a par exemple un rapport FerII/Fer total inférieur à 0,1, c'est dire en excès de FerIII. La concentration en oxygène dissous mesurée est par exemple de 50% de la valeur de la concentration en oxygéne dissous à la saturation dans l'eau. On va pouvoir diminuer le débit d'air de façon à obtenir une teneur en oxygène dissous dans la solution inférieure à 5%, et préférentiellement proche de zéro avec un rapport FerII/Fer total inférieur à 0,1. Dans ces conditions de transfert d'oxygène contrôlées, l'oxygène qui est consommé ne contribue qu'à la réaction de régénération et non aux réactions secondaires comme celles de dégradation de l'agent chélatant.

A titre d'exemple, une série d'expériences a été réalisée dans un réacteur de type batch en mesurant le pourcentage d'oxygène résiduel au moyen d'une sonde de marque INGOLD.

L'essai est réalisé en injectant simultanément, en fond de colonne, de l'H₂S et de l'air à un débit de 90 l/h.

La variation du débit d'H₂S permet d'influer sur le régime de transfert de l'oxygène et par conséquent sur la concentration en oxygène dissous dans la solution.

La solution catalytique est une solution de fer complexé par de l'acide nitrilotriacétique et de concentrations respectives 0,25 et 0,5 mol/l. Le pH des essais est maintenu à 7 par ajout d'une base si nécessaire. Durant la durée des essais, le soufre est périodiquement retiré de la solution par filtration de la solution.

La dégradation de l'agent complexant est suivie par prélèvement et analyse électrophorèse capillaire. Cette analyse permet également d'identifier les produits de dégradation tels que, par exemple, l'oxalate, la glycine.

Le tableau ci-dessous présente les résultats obtenus sur la dégradation chimique d'un agent complexant dans le cas d'une solution contenant 0,5mole/l en agent complexant et 0,25 mole/l en fer total. Le pH de la solution est maintenu à 7. La dégradation de l'agent complexant est rapporté à la quantité de soufre traité.

L'expérience est réalisée à 20°C et à pression atmosphérique.

| H₂S (l/h) | Soufre (g/h) | O₂ résiduel (%) | Vitesse de dégradation (mol/l.kg)* 1000 |
|---|---|---|---|
| 0,4 | 0,57 | 0 | 0,7 |
| 0,12 | 0,17 | 18 | 1,8 |
| 0,11 | 0,157 | 50 | 2,7 |

Dans les conditions d'expérience décrites, la saturation en oxygène dissous de la solution rapportée à de l'eau est de 8mg/l.

Par conséquent, la consommation d'agent complexant sera diminuée lorsque l'étape de régénération est réalisée en condition de transfert de l'oxygène contrôlé.

Le procédé s'avère plus économique.

## Revendications

1. Procédé de régénération d'une solution catalytique rédox au moins en partie réduite, comprenant au moins un agent chélatant d'un métal polyvalent associé à la dite solution dans lequel on fait circuler dans au moins une zone de régénération la dite solution en présence d'un gaz contenant de l'oxygène, dans des conditions de régénération appropriées et on récupère un effluent de régénération au moins en partie oxydé, **caractérisé en ce qu'**on mesure la concentration en oxygène dissous dans l'effluent de régénération et on ajuste le débit de solution catalytique et/ou du gaz contenant de l'oxygène entrant dans la zone de régénération de façon à obtenir une valeur inférieure à 20% de la valeur de la concentration en oxygène dissous à la saturation dans l'eau, dans les conditions de la régénération de façon à minimiser la dégradation de l'agent chélatant et de façon à régénérer au moins en partie la solution catalytique.

2. Procédé selon la revendication 1, dans lequel la valeur de la concentration en oxygène dissous dans l'effluent de régénération est inférieure à 10 %, de préférence comprise entre 0,01 à 5% de la valeur de la concentration en oxygène dissous à la saturation dans l'eau dans les conditions de la régénération et plus particulièrement sensiblement égale à zéro.

3. Procédé selon l'une des revendications 1 à 2, dans lequel on mesure la concentration en oxygène dissous dans ledit effluent au moyen d'une sonde dont le principe de mesure est ampérométrique ou polarographique.

4. Procédé selon l'une des revendications 1 à 3, dans lequel on mesure la concentration en oxygène dissous en ligne.

5. Procédé selon la revendication 4, dans lequel on ajuste en continu le débit du gaz contenant de l'oxygène dans la zone de régénération.

6. Procédé selon l'une des revendications 1 à 5, dans lequel l'agent chélatant est choisi dans le groupe formé par l'acétylacétone, l'acide citrique, l'acide salicylique, l'acide sulfosalicylique, le tiron, le dimercapto-2-3propanol, l'EDTA, le NTA, l'HEDTA, le DCTA, l'IDA et l'ADA.

7. Procédé selon l'une des revendications 1 à 6, dans lequel le métal est le fer ou le vanadium.

8. Utilisation du procédé selon l'une des revendications 1 à 7 dans un procédé de désulfuration d'un gaz contenant de l'hydrogène sulfuré selon lequel on fait réagir dans un zone d'absorption le gaz avec une solution catalytique rédox au moins en partie oxydée, on produit du soufre que l'on récupère et une solution catalytique au moins en partie réduite et on régénère la dite solution catalytique au moins en partie réduite selon l'une des revendications 1 à 7, et on recycle l'effluent de régénération dans la zone d'absorption.

## Patentansprüche

1. Verfahren zur Regenerierung einer redox-katalytischen Lösung, die zumindest zum Teil reduziert ist, umfassend mindestens einen Chelatbildner eines polyvalenten Metalls, der mit der Lösung verbunden ist, in der in mindestens einer Regenerierungszone eine Lösung in Gegenwart eines Gases, das Sauerstoff enthält, zirkuliert wird, unter geeigneten Regenerierungsbedingungen und es wird ein Regenerierungsabwasser wiedergewonnen, das mindestens zum Teil oxidiert ist, **dadurch gekennzeichnet, dass** die Sauerstoffkonzentration im Regenerierungsabwasser gemessenen wird, und dass die Menge an katalytischer Lösung und/oder an Gas, das Sauserstoff enthält, angepasst wird, die in die Regenerierungszone eintritt, um einen Wert unter 20 % der Konzentration des im Wasser bis zur Sättigung gelösten Sauerstoffs zu erhalten, unter den Bedingungen der Regenerierung, um den Abbau des Chelatbildners zu minimieren und um zumindest zum Teil die katalytische Lösung zu regenerieren.

2. Verfahren nach Anspruch 1, in dem der Wert der Konzentration des im Regenerierungsabwasser gelösten Sauerstoffs unter 10 % liegt, vorzugsweise zwischen 0,01 und 5 % des Werts der Konzentration des im Wasser bis zur Sättigung gelösten Sauerstoffs, unter Regenerierungsbedingungen und besonders bevorzugt ungefähr gleich Null ist.

3. Verfahren nach einem der Ansprüche 1 bis 2, in dem die im Abwasser gelöste Sauerstoffkonzentration mittels einer Sonde gemessen wird, deren Messprinzip amperometrisch oder polarografisch ist.

4. Verfahren nach einem der Ansprüche 1 bis 3, in dem die gelöste Sauerstoffkonzentration online gemessen wird.

5. Verfahren nach Anspruch 4, in dem die Gasmenge, die Sauerstoff enthält, in der Regenerierungszone kontinuierlich angepasst wird.

6. Verfahren nach einem der Ansprüche 1 bis 5, in dem der Chelatbildner ausgewählt wird aus einer Gruppe, gebildet aus Acetylaceton, Zitronensäure, Salicylsäure, Sulfosalicylsäure, Tiron, 2,3-Dimercaptopropanol, EDTA, NTA, HEDTA, DCTA IDA und ADA.

7. Verfahren nach einem der Ansprüche 1 bis 6, in dem das Metall Eisen oder Vanadium ist.

8. Verwendung des Verfahrens nach einem der Ansprüche 1 bis 7 in einem Entschwefelungsverfahren eines Gases, das Schwefelwasserstoff enthält, wobei das Gas in einer Absorptionszone mit einer redox-katalytischen Lösung reagiert wird, die zumindest teilweise oxidiert ist, wobei der Schwefel hergestellt wird, der aus einer katalytische Lösung, die zumindest zum Teil reduziert wird, und wobei diese katalytische Lösung, die zumindest zum Teil reduziert ist, gemäß einer der Ansprüche 1 bis 7, wiedergewonnen wird, und das Regenerierungsabwasser in der Absorptionszone recycelt wird.

## Claims

1. Process for regenerating a catalytic redox solution that is at least partly reduced, whereby said process comprises at least one chelating agent of a polyvalent metal that is associated with said solution, in which in an least one regeneration zone said solution is circulated in the presence of an oxygen-containing gas under appropriate regeneration conditions, and a regeneration effluent that is at least partly oxidized is recovered, **characterized in that** the concentration of oxygen dissolved in the regeneration effluent is measured, and the flow rate of the catalytic solution and/or the oxygen-containing gas that enters the regeneration zone is adjusted so as to obtain a value of less than 20% of the dissolved-oxygen concentration value at saturation in water, under regeneration conditions so as to minimize the degradation of the chelating agent and to regenerate the catalytic solution, at least in part.

2. Process according to claim 1, wherein the concentration value of oxygen dissolved in the regeneration effluent is less than 10%, preferably between 0.01 and 5% of the dissolved-oxygen concentration value at saturation in water under the conditions of the regeneration process and more particularly essentially equal to 0.

3. Process according to one of claims 1-2, wherein the dissolved-oxygen concentration in said effluent is measured by means of a probe whose measurement principle is amperometric or polarographic.

4. Process according to one of claims 1 to 3, wherein the dissolved-oxygen concentration is measured on line.

5. Process according to claim 4, wherein the flow rate of the oxygen-containing gas is continually adjusted in the regeneration zone.

6. Process according to one of claims 1 to 5, wherein the chelating agent is selected from the group formed by acetyl acetone, citric acid, salicylic acid, sulfosalicylic acid, tiron, dimercapto-2-3 propanol, EDTA, NTA, HEDTA, DCTA, IDA, and ADA.

7. Process according to one of claims 1 to 6, wherein the metal is iron or vanadium.

8. Utilization of the process according to one of claims 1 to 7 in a process for desulfurizing a hydrogen sulfide-containing gas according to which in an absorption zone the gas is reacted with a catalytic redox solution that is at least partly oxidized, sulfur is produced that is recovered, along with a catalytic solution that is at least partly reduced, and said catalytic solution, which is at least partly reduced, is regenerated according to one of Claims 1 to 7, and the regeneration effluent is recycled in the absorption zone.
